# EUROPÄISCHE PATENTANMELDUNG

(11) **EP 4 194 278 A1**
(43) Veröffentlichungstag der Anmeldung: **14.06.2023**
(21) Anmeldenummer: 22212676.5
(22) Anmeldetag: 09.12.2022
(51) Int. Cl.: B60R 15/02, B29D 24/00, B29C 53/06, E05D 1/02

(54) **FREIZEITFAHRZEUG SOWIE NASSZELLE UND ECKVERBINDUNG FÜR EIN FREIZEITFAHRZEUG**

(30) Priorität: 09.12.2021 DE 102021132587
(71) Anmelder: Hymer GmbH & Co. KG, 88339 Bad Waldsee (DE)
(72) Erfinder: Steigmiller, Anton, 88444 Ummendorf (DE)
(74) Vertreter: Waller, Stefan

(57) **Zusammenfassung**

Ein Freizeitfahrzeug (2) weist eine Einrichtung (1), insbesondere eine Nasszelle (1), auf. Hierbei ist eine Eckverbindung (3) zur wasserdichten Ausgestaltung der Einrichtung (1) an einer Ecke (5) zwischen einer ersten Wand (6) der Einrichtung (1) und einer zweiten Wand (7) der Einrichtung (1) vorgesehen. Hierfür ist eine Wabenplatte (8) vorgesehen, wobei die erste Wand (6) durch ein erstes Plattenteil (6') der Wabenplatte (8) gebildet ist und wobei die zweite Wand (7) durch ein zweites Plattenteil (7`) der Wabenplatte (8) gebildet ist. Ferner ist die Ecke (5) durch einen komprimierten Eckübergang der Wabenplatte (8), der zwischen dem ersten Plattenteil (6`) und dem zweiten Plattenteil (7') ausgestaltet ist, gebildet.

## Beschreibung

Die Erfindung betrifft ein Freizeitfahrzeug, insbesondere ein Wohnmobil oder einen Wohnwagen, sowie eine Nasszelle und eine Eckverbindung zur wasserdichten Ausgestaltung einer Einrichtung.

Aus der DE 295 03 469 U1 ist eine kompakte Nasszelle für ein Wohnmobil bekannt. Die bekannte Nasszelle enthält im Wesentlichen drei Elemente, nämlich eine Dusche mit einer zugeordneten Duschabtrennung, ein vor der Dusche und außerhalb der Duschabtrennung angeordnetes Waschbecken und einen ebenfalls vor der Dusche und außerhalb der Duschabtrennung angeordneten Toilettensitz. Ferner sind Seitenwände vorgesehen.

In herkömmlichen Duschen und Sanitärzellen von Campingfahrzeugen können Seitenwände zueinander auf geeignete Weise abgedichtet werden. Hierbei ist es denkbar, dass wasserbeständige Seitenteile miteinander verschraubt werden, wobei eine geeignete Dichtung durch das Zusammenschrauben komprimiert wird, um eine Dichtwirkung zu erzielen. Nicht wasserbeständige Seitenwände können auf der Innenseite mit wasserbeständigen Kunststoffplatten verkleidet und mit Dichtprofilen oder pastösen Dichtstoffen, insbesondere Silikon, abgedichtet werden.

Gerade bei einem Freizeitfahrzeug, wie einem Wohnmobil oder einem Wohnwagen, ist eine gewichtsreduzierte Auslegung besonders wesentlich. Herkömmliche Verfahren zum Abdichten einer Nasszelle sind aufwändig, führen bei Prozessunschärfe zu Undichtigkeiten und haben in der Summe ein hohes Gewicht.

Der vorliegenden Erfindung liegt die Aufgabe zugrunde, eine Eckverbindung zur wasserdichten Ausgestaltung einer Einrichtung, die für ein Freizeitfahrzeug, insbesondere ein Wohnmobil oder einen Wohnwagen, dient, eine Nasszelle für ein Freizeitfahrzeug und ein Freizeitfahrzeug anzugeben, die in verbesserter Weise ausgestaltet sind.

Diese Aufgabe wird durch eine Eckverbindung mit den Merkmalen des unabhängigen Patentanspruchs 1, eine Nasszelle mit den Merkmalen des Patentanspruchs 8 und ein Freizeitfahrzeug mit den Merkmalen des Patentanspruchs 9 gelöst.

Die Aufgabe wird durch eine Eckverbindung zur wasserdichten Ausgestaltung einer Einrichtung, die für ein Freizeitfahrzeug, insbesondere ein Wohnmobil oder einen Wohnwagen, dient, an einer Ecke zwischen einer ersten Wand der Einrichtung und einer zweiten Wand der Einrichtung gelöst, wobei eine Wabenplatte vorgesehen ist, wobei die erste Wand zumindest teilweise durch ein erstes Plattenteil der Wabenplatte gebildet ist, wobei die zweite Wand zumindest teilweise durch ein zweites Plattenteil der Wabenplatte gebildet ist und wobei die Ecke zumindest teilweise durch einen komprimierten Eckübergang der Wabenplatte, der zwischen dem ersten Plattenteil und dem zweiten Plattenteil ausgestaltet ist, gebildet ist.

Je nach Ausgestaltung und Anwendungsfall ist es denkbar, dass das erste Plattenteil und das zweite Plattenteil beispielsweise noch mit einer Beschichtung versehen werden. Beispielsweise kann je nach Anwendungsfall auch eine Kunststofffolie aufgeklebt werden, um auf einfache Weise das Design zu ändern. Die erste Wand und die zweite Wand sind daher nicht notwendigerweise ausschließlich durch das erste Plattenteil und das zweite Plattenteil gebildet.

Ferner wird die Aufgabe durch eine Nasszelle für ein Freizeitfahrzeug, insbesondere ein Wohnmobil oder einen Wohnwagen, mit zumindest einer solchen Eckverbindung gelöst, über die eine erste Wand, insbesondere eine erste Seitenwand, und zumindest eine zweite Wand, insbesondere zumindest eine zweite Seitenwand, miteinander verbunden sind.

Außerdem wird die Aufgabe durch ein Freizeitfahrzeug, insbesondere ein Wohnmobil oder einen Wohnwagen, mit zumindest einer Einrichtung, die eine erste Wand und zumindest eine zweite Wand aufweist, gelöst, wobei eine Eckverbindung zwischen der ersten Wand und der zweiten Wand auf die genannte Weise ausgebildet ist.

Vorteilhaft ist es, dass der komprimierte Eckübergang durch einseitiges lokales Erwärmen und Komprimieren der Wabenplatte ausgestaltet ist. Hierdurch ist eine einfache und prozesssichere Ausgestaltung des Eckübergangs möglich. Im warmen Zustand kann außerdem in einfacher Weise ein Verformen ermöglicht werden.

Vorteilhaft ist es, dass die Wabenplatte aus zumindest einem Werkstoff gebildet ist, der auf einem Polyethylen basiert. Insbesondere kann die Wabenplatte zumindest im Wesentlichen aus Polyethylen gebildet sein. Hierdurch kann in vorteilhafter Weise der komprimierte Eckübergang realisiert werden.

Es ist auch vorteilhaft, dass an dem komprimierten Eckübergang eine Vertiefung an der Wabenplatte ausgestaltet ist, die sich entlang der Ecke zwischen der ersten Wand und der zweiten Wand zumindest näherungsweise linear erstreckt. Hierbei ist es ferner vorteilhaft, dass die Vertiefung nach innen zwischen der ersten Wand und der zweiten Wand eine Öffnung aufweist und dass die Öffnung der Vertiefung abgedeckt ist. Durch die Abdeckung kann zum einen vermieden werden, dass sich Schmutz oder ähnliches in der Vertiefung sammelt. Dadurch wird eine Reinigung erleichtert. Zum anderen kann durch die Abdeckung eine zusätzliche Stabilität, insbesondere eine zusätzliche Versteifung, an der Ecke erzielt werden.

Vorteilhaft ist es in diesem Zusammenhang auch, dass die Öffnung der Vertiefung durch zumindest eine Abdeckung, insbesondere eine Lichtleiste und/oder zumindest einen Keder und/oder zumindest eine Blende, abgedeckt ist. Ferner ist es vorteilhaft, dass die Abdeckung einen Installationskanal aufweist. Dadurch ist auf einfache Weise eine formschöne und stabile Ausgestaltung möglich. Ferner kann hierbei ein Verarbeitungsprozess optimiert werden. Ferner kann eine Gewichtseinsparung erzielt werden, da die Abdichtung vergleichsweise gering belastet ist und somit auch relativ leicht ausgestaltet werden kann. Ferner kann eine zusätzliche Nutzung für eine Installation erfolgen.

Vorteilhaft ist es, dass die Wabenplatte am Eckübergang gebogen ist. Die Biegung kann hierbei auf geeignete Weise ausgestaltet werden. Beispielsweise kann nach dem partiellen Erwärmen und Komprimieren ein ein- oder mehrfaches Knicken und/oder Falten erfolgen. Dadurch bleibt die durchgängig wasserdichte Oberfläche erhalten.

Somit kann die Einrichtung insbesondere als sehr leichter und prozesssicher herstellbarer Korpus ausgeführt werden. Dieser Korpus hat dann wasserdichte Ecken.

Der Korpus eignet sich besonders für eine Nasszelle, die eine Dusche aufweisen kann. Die Einrichtung kann allerdings auch an anderen Stellen im Freizeitfahrzeug genutzt werden.

Weitere Vorteile und Einzelheiten der Erfindung werden anhand des in der schematischen Figur dargestellten Ausführungsbeispiels näher erläutert. Hierbei zeigt:

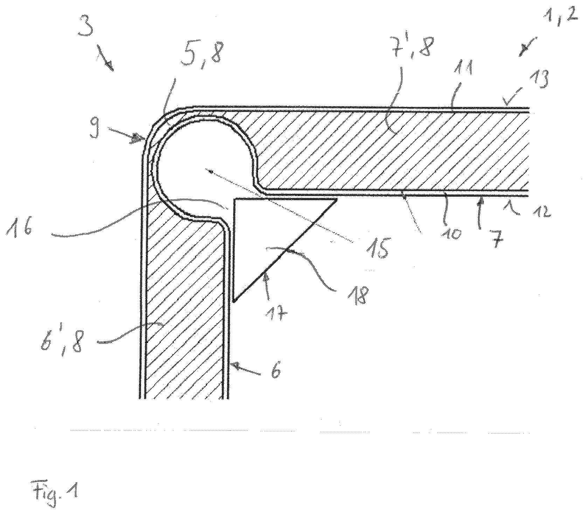

- Fig. 1: eine Nasszelle für ein Freizeitfahrzeug entsprechend einem Ausführungsbeispiel in einer auszugsweisen, schematischen Schnittdarstellung, wobei eine Ecke zwischen zwei Wänden dargestellt ist.

Fig. 1 zeigt eine Einrichtung 1 eines Freizeitfahrzeugs 2 entsprechend einem Ausführungsbeispiel der Erfindung in einer auszugsweisen, schematischen Schnittdarstellung. Die Einrichtung 1 ist in diesem Ausführungsbeispiel als Nasszelle 1 ausgebildet. Hierbei ist eine Eckverbindung 3 realisiert. Die Nasszelle 1 wird an einer Ecke 5 durch die Eckverbindung 3 wasserdicht ausgestaltet. Die Ecke 5 befindet sich hierbei zwischen einer ersten Wand 6 der Nasszelle 1 und einer zweiten Wand 7 der Nasszelle 1.

Zur Ausgestaltung der Wände 6, 7 und der Ecke 5 dient eine Wabenplatte 8. In diesem Ausführungsbeispiel ist die erste Wand 6 durch ein Plattenteil 6' der Wabenplatte 8 gebildet. Die zweite Wand 7 ist durch ein zweites Plattenteil 7' der Wabenplatte 8 gebildet. Die Ecke 5 ist durch einen komprimierten Übergang 9 der Wabenplatte 8 gebildet. Der komprimierte Eckübergang 9 ist hierbei zwischen dem ersten Plattenteil 6' und dem zweiten Plattenteil 7' ausgestaltet.

Auf entsprechende Weise können auch weitere Wände durch weitere Plattenteile über weitere komprimierte Eckübergänge angebunden werden. Dadurch ist insbesondere eine Realisierung der Seitenwände der Nasszelle 1 möglich.

Zur Herstellung des Eckübergangs 9 wird die Wabenplatte 8 einseitig linear, partiell erwärmt und komprimiert. Das einseitige lokale Erwärmen wird hierbei von der Seite einer Vertiefung 15 aus erzeugt.

Die Wabenplatte 8 ist hierbei vorzugsweise aus Polyethylen gebildet. Nach dem Verformen ist dann die Vertiefung 15 an der Ecke 5 zwischen der ersten Wand 6 und der zweiten Wand 7 ausgestaltet, die sich zumindest näherungsweise linear entlang der Ecke 5 erstreckt. In diesem Ausführungsbeispiel ist die Vertiefung 15 zwischen der ersten Wand 6 und der zweiten Wand 7 von innen her ausgebildet. Ferner ist eine nach innen hin eine Öffnung 16 der Vertiefung 15 gebildet.

Im warmen Zustand kann die Wabenplatte 8 beispielsweise geknickt beziehungsweise gefaltet werden. Hierbei bleiben wasserdichte Oberflächen 10, 11 der Wabenplatte 8 an einer Innenseite 12 und einer Außenseite 13 erhalten.

Die Öffnung 16 im Knickbereich wird mit einer Abdeckung 17 abgedeckt. Die Abdeckung 17 kann als Lichtleiste, Keder oder Blende 17 mit integrierter Installation ausgebildet sein. Hierbei kann die Abdeckung 17 einen Installationskanal 18 aufweisen.

Die Erfindung ist nicht auf das beschriebene Ausführungsbeispiel beschränkt.

## Patentansprüche

1. Eckverbindung (3) zur wasserdichten Ausgestaltung einer Einrichtung (1), die für ein Freizeitfahrzeug (2), insbesondere ein Wohnmobil oder einen Wohnwagen, dient, an einer Ecke (5) zwischen einer ersten Wand (6) der Einrichtung (1) und einer zweiten Wand (7) der Einrichtung (1),
**dadurch gekennzeichnet,**
**dass** eine Wabenplatte (8) vorgesehen ist, dass die erste Wand (6) zumindest teilweise durch ein erstes Plattenteil (6`) der Wabenplatte (8) gebildet ist, dass die zweite Wand (7) zumindest teilweise durch ein zweites Plattenteil (7') der Wabenplatte (8) gebildet ist und dass die Ecke (5) zumindest teilweise durch einen komprimierten Eckübergang (9) der Wabenplatte (8), der zwischen dem ersten Plattenteil (6') und dem zweiten Plattenteil (7`) ausgestaltet ist, gebildet ist.

2. Eckverbindung nach Anspruch 1,
**dadurch gekennzeichnet,**
**dass** der komprimierte Eckübergang (9) durch einseitiges lokales Erwärmen und Komprimieren der Wabenplatte (8) ausgestaltet ist.

3. Eckverbindung nach Anspruch 1 oder 2,
**dadurch gekennzeichnet,**
**dass** die Wabenplatte (8) aus zumindest einem Werkstoff gebildet ist, der auf einem Polyethylen basiert.

4. Eckverbindung nach einem der Ansprüche 1 bis 3,
**dadurch gekennzeichnet,**
**dass** an dem komprimierten Eckübergang (9) eine Vertiefung (15) in der Wabenplatte (8) ausgestaltet ist, die sich entlang der Ecke (5) zwischen der ersten Wand (6) und der zweiten Wand (7) zumindest näherungsweise linear erstreckt.

5. Eckverbindung nach Anspruch 4,
**dadurch gekennzeichnet,**
**dass** die Vertiefung nach innen zwischen der ersten Wand (6) und der zweiten Wand (7) eine Öffnung (16) aufweist und dass die Öffnung (16) der Vertiefung (15) abgedeckt ist.

6. Eckverbindung nach Anspruch 5,
**dadurch gekennzeichnet,**
**dass** die Öffnung (16) der Vertiefung (15) durch zumindest eine Abdeckung (17), insbesondere eine Lichtleiste (17) und/oder zumindest einen Keder (17) und/oder zumindest eine Blende (17), abgedeckt ist und/oder dass die Abdeckung (17) einen Installationskanal (18) aufweist.

7. Eckverbindung nach einem der Ansprüche 1 bis 6,
**dadurch gekennzeichnet,**
**dass** die Wabenplatte (8) am Eckübergang (9) gebogen ist.

8. Nasszelle (1) für ein Freizeitfahrzeug (2), insbesondere für ein Wohnmobil oder einen Wohnwagen, mit zumindest einer Eckverbindung (3) nach einem der Ansprüche 1 bis 7, über die eine erste Wand (6), insbesondere eine erste Seitenwand, und zumindest eine zweite Wand (7), insbesondere zumindest eine zweite Seitenwand, miteinander verbunden sind.

9. Freizeitfahrzeug (2), insbesondere Wohnmobil oder Wohnwagen, mit zumindest einer Einrichtung (1), die eine erste Wand (6) und zumindest eine zweite Wand (7) aufweist, wobei eine Eckverbindung (3) zwischen der ersten Wand (6) und der zweiten Wand (7) nach einem der Ansprüche 1 bis 7 ausgebildet ist.
